Europäisches Patentamt

European Patent Office

Office européen des brevets

(19)

(11) Veröffentlichungsnummer: **0 052 719**
**B1**

(12) **EUROPÄISCHE PATENTSCHRIFT**

(45) Veröffentlichungstag der Patentschrift:
**20.03.85**

(21) Anmeldenummer: **81107805.4**

(22) Anmeldetag: **01.10.81**

(51) Int. Cl.⁴: **B 01 D 13/00,** B 01 D 13/01,
B 01 J 23/90, C 07 H 9/04

(54) Verfahren zur Abtrennung von Metallkatalysatoren und Verwendung von Membrantrennvorrichtungen.

(30) Priorität: 29.10.80 DE 3040631

(43) Veröffentlichungstag der Anmeldung:
02.06.82 Patentblatt 82/22

(45) Bekanntmachung des Hinweises auf die Patenterteilung:
20.03.85 Patentblatt 85/12

(84) Benannte Vertragsstaaten:
CH DE FR GB IT LI

(56) Entgegenhaltungen:
FR - A - 2 228 518
GB - A - 1 453 504
US - A - 3 433 358

CHEMICAL AND ENGINEERING NEWS, Band 58, Nr. 42, 20. Oktober, 1980, Easton, Pennsylvania, (US) "Microfiltration system avoids clogged filters" Seiten 38-39
CHEMICAL ENGINEERING PROGRESS, Band 64, Nr. 12, Dezember 1968, New York (US) A.S. MICHAELS et al.: "New separation technique for the CPI" Seiten 31-43
INDUSTRIAL AND ENGINEERING CHEMISTRY; PROCESS DESIGN AND DEVELOPMENT, Band 9, Nr. 4, Oktober 1970, Washington D.C. (US) J.A. DAHLHEIMER et al.: "Hyperfiltration, Application of woven fiber hoses to hyperfiltration of salts and crossflow filtration of

(73) Patentinhaber: Merck Patent Gesellschaft mit beschränkter Haftung, Frankfurter Strasse 250, D-6100 Darmstadt (DE)

(72) Erfinder: Wintermeyer, Willi, Dr., Gartenstrasse 4, D-6104 Seeheim-Jugenheim 2 (DE)
Erfinder: Wittmann, Rolf, Dr., Tannenstrasse 6, D-6109 Mühltal 2 (DE)
Erfinder: Butzke, Jügen, Waldstrasse 48, D-6110 Dieburg (DE)

(56) Entgegenhaltungen: (Fortsetzung)
suspendend solids" Seiten 566-569
CHEMISTRY AND INDUSTRY, 7. März, 1970, Letchworth (UK) P.S. HARRISON: "Some applications of reverse osmosis under consideration for industrial use" Seiten 325-328
INDUSTRIAL WATER ENGINEERING, Juni-Juli, 1971, M.C. PORTER et al.: "Byproduct recovery by ultrafiltration" Seiten 18-24

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Abtrennung von Metallkatalysatoren aus Reaktionslösungen.

Viele Metalle, sei es in metallischer Form oder in Form von Verbindungen, finden Anwendung als Katalysatoren bei zahlreichen chemischen Verfahren. Da die katalysierte Reaktion in der Regel an der Oberfläche des Katalysators stattfindet, spielt für die Wirksamkeit des Katalysators seine Struktur eine wesentliche Rolle. Die als Katalysatoren eingesetzten Metalle stellen oft einen erheblichen Wert dar und dürfen darüberhinaus aus Gründen des Umweltschutzes auf keinen Fall in die Abwässer gelangen. Es ist daher zwingend notwendig, die Katalysatoren quantitativ aus dem Reaktionsgemisch zu entfernen.

Die bisher übliche Abtrennung von Katalysatoren wurde über entsprechende Trennvorrichtungen durch Filtration, Sedimentation oder mit Hilfe von Separatoren als sogenannte «dead end»-Filtration ausgeführt; d.h. der Katalysator wurde zu einem Filterkuchen komprimiert und in weitgehend trockener Form gewonnen. Dieses Verfahren hat jedoch eine Reihe von Nachteilen. Zum einen lassen sich gelartige schwerfiltrierbare Katalysatoren wie z.B. Nickelhydroxidschlämme nur mit Hilfe von Filterhilfsmitteln filtrieren. Dabei gelangen jedoch Fremdstoffe in den Katalysator, der aus diesem Grund nicht direkt wieder verwendet werden kann, sondern in oft umständlichen Verfahren regeneriert werden muss. Zum anderen wird durch das Zusammenpressen als Filterkuchen oft die Struktur des in sehr feiner Verteilung vorliegenden Katalysators zerstört, so dass ebenfalls vor der Wiederverwendung eine Regenerierung notwendig ist.

In Chemical and Engineering News, Band 58, Nr. 42 vom 20.10.1980, Seite 38–39, wird ein Mikrofiltrationssystem beschrieben, mit dem z.B. Farbpigmente und ausgefällte Metalle abgetrennt werden können. Dabei wird mit einer Querstromfiltration bei hoher Fliessgeschwindigkeit aber niedrigem Druck gearbeitet. Es ist eine Kreislaufschleife vorgesehen und eine periodische, kurzzeitige Umkehr des Differenzdrucks zwischen Permeat- und Retentatraum.

In Chemical Engineering Progress, Band 64, Nr. 12 vom Dezember 1968, Seite 31–43, wird eine Technik beschrieben, bei der in einer Ultrafiltrationsanlage eine Katalysatorsuspension im Kreislauf umgepumpt wird, wobei kontinuierlich Reagenzien in die Suspension eingeführt und die Reaktionsprodukte abgetrennt werden.

Ferner ist in Industrial Water Engineering 1971, Seite 18–24, beschrieben, dass mit Hilfe der Ultrafiltration kolloidale Metalloxide, beispielsweise Nickel- und Eisenhydroxid, entwässert werden können.

Eine Abtrennung von Katalysatoren unter Erhalt der katalytisch aktiven Struktur des Katalysators ist bisher nicht beschrieben worden.

Es wurde nun gefunden, dass es mit Hilfe von Mikrofiltrationsverfahren durch eine Querstromfiltration möglich ist, die bei der Oxidation von Diacetonsorbose zu Diacetonketogulonsäure verwendeten gelartigen Nickelhydroxidschlämme in ihrer aktiven Struktur aus dem Reaktionsgemisch zu gewinnen, wobei auf den Einsatz von Filterhilfsmitteln verzichtet werden kann.

Gegenstand der Erfindung ist demgemäss ein Verfahren zur Abtrennung eines festen Metallkatalysators aus einer Reaktionsmischung durch Querstromfiltration unter Verwendung einer Mikrofiltrationstrennvorrichtung, wobei das den Metallkatalysator enthaltende Retentat im Kreislauf geführt wird und wobei der Differenzdruck zwischen Permeat- und Retentatraum in weitgehend regelmässigen Zeitabständen kurzzeitig umgekehrt wird, dadurch gekennzeichnet, dass eine bei der Oxidation von Diacetonsorbose zur Diacetonketogulonsäure anfallende, gelartige Nickelhydroxidschlämme enthaltende Reaktionslösung mit einer solchen Geschwindigkeit umgepumpt wird, dass sich eine Strömung mit einer Reynoldszahl von mindestens 1000 ergibt.

Die Vorteile des erfindungsgemässen Verfahrens liegen insbesondere darin, dass der in Form einer konzentrierten Suspension zurückgewonne Katalysator unmittelbar ohne aufwendige Regenerierung wieder eingesetzt werden kann und dabei eine unverminderte Aktivität zeigt.

Bei der Abtrennung der gelartigen Nickelhydroxidschlämme, die z.B. als Katalysatoren bei der Oxidation von Diacetonsorbose grosstechnisch eingesetzt werden, stellt das erfindungsgemässe Verfahren einen erheblichen technischen Fortschritt dar.

In den Mikrofiltrationsanlagen können alle üblichen Mikrofiltrationsmembranen verwendet werden, die in der Regel Porendurchmesser von etwa 0,01–50 μm besitzen und meist aus Polyethylen, Polypropylen oder Polyamid gefertigt sind.

Zur Durchführung des Verfahrens werden die üblichen Vorrichtungen verwendet. Die Membranen können in Filterpressenbauweise angeordnet sein. In der Regel verwendet man die Membranen jedoch in Form von Hohlfasern oder Schläuchen mit Innendurchmessern von etwa 0,3–30 mm, die in einer Vielzahl zu einem Modul zusammengefasst sind und auf diese Weise auf engem Raum eine sehr grosse Membranfläche zur Verfügung stellen.

Die Anlagen werden in jedem Fall mit zumindest einem Retentatkreislauf und wahlweise einem Permeatkreislauf gefahren, zwischen denen ein Differenzdruck von etwa 0,5–2 bar besteht. Dabei stellen sich Permeatleistungen von etwa 100 bis etwa 1500 Liter pro m² Membranfläche und pro Stunde ein.

Um die Viskosität der im Kreislauf geführten Lösungen bzw. Suspensionen zu verringern, wird vorzugsweise, sofern das Produkt und die Membren es zulässt, bei erhöhter Temperatur gearbeitet.

Wesentlich für eine hohe und gleichmässige Permeatleistung ist neben der Druckdifferenz zwischen Permeat- und Retentatraum eine hohe Strömungsgeschwindigkeit der Suspension auf der Retentatseite parallel zur Membranfläche. Durch die starke Strömung sollen die von der Membran zurückgehaltenen Feststoffanteile von der Membranoberfläche weggespült werden. Die bei diesem Querstromverfahren verwendeten Strömungsgeschwindigkeiten sollten so hoch sein, dass eine Strömung mit einer Reynolds-Zahl von mindestens 1000 entsteht. Bei einer angenommenen Viskosität der Suspension von etwa 1,5 mPas und einem Schlauchdurchmesser von etwa 6 mm entspricht das einer Strömungsgeschwindigkeit von etwa 0,25 m/sec. Bei anderen Viskositäten und anderen Hohlfaserdurchmessern ergeben sich selbstverständlich andere Strömungsgeschwindigkeiten. Bevorzugt wird eine Strömung mit einer Reynols-Zahl von etwa 2000–20 000 eingestellt.

Trotz dieser starken Strömung längs der Membranoberfläche kann es, insbesondere bei sehr feinteiligen Suspensionen, zu einem teilweisen Verstopfen der Membranporen kommen, wodurch die Permeatleistung absinkt. Es hat sich deshalb als vorteilhaft erwiesen, in weitgehend regelmässigen Abständen, z.B. nach etwa 1–5 Minuten Filtrationszeit, den Differenzdruck zwischen Permeat- und Retentatraum für kurze Zeit, z.B. 1–5 sec., umzukehren, so dass durch den nun umgekehrten Fluss des Permeats zurück ins Retentat die Membranporen freigespült werden. Auf diese Weise ist während der gesamten Abtrennung eine weitgehend konstante und hohe Permeatleistung zu erzielen.

Die Abtrennung kann diskontinuierlich chargenweise durchgeführt werden. Durch kaskadenförmiges Hintereinanderschalten mehrerer Anlagen ist jedoch auch eine kontinuierliche Fahrweise möglich. Gegen Ende der Abtrennung, wenn der Feststoffgehalt der Retentatsuspension stark ansteigt, kann das Retentat mit Lösungsmittel, in der Regel Wasser, verdünnt werden, um die Pumpfähigkeit der Mischung zu erhalten. Dabei wird der Katalysator ausgewaschen und kann in reiner Form entnommen werden.

Die Abtrennung der Katalysatoren kann aus wässerigen Lösungen oder auch aus Lösungen organischer Lösungsmittel erfolgen. Gegebenenfalls muss die verwendete Membran durch eine schrittweise Umstellung auf das jeweils verwendete Lösungsmittel eingestellt werden. Diese Umstimmung von Membranen ist bekannt und z.B. in der DE-A 2 946 067 beschrieben.

Nach Beendigung der Abtrennung kann die konzentrierte Katalysatorsuspension entnommen und direkt wieder in die zu katalysierende Reaktion eingesetzt werden. Durch die Erfindung steht damit ein wertvolles Verfahren zur Abtrennung und Wiedergewinnung von vollaktiven Metallkatalysatoren zur Verfügung.

Das nachfolgende Beispiel soll die Erfindung erläutern. Mit gleich gutem Erfolg wie in dem Beispiel angeführt, lassen sich auch andere Reaktionslösungen aufarbeiten.

Beispiel 1
Über einen Mikrofiltrations-Schlauchmodul (Polypropylenschläuche mit 6 mm Innendurchmesser, mittlerer Porendurchmesser etwa 0,2 μm, 0,66 m² effektive Filterfläche) werden 1000 l einer wässerig alkalischen Suspension, die 0,3 kg Nickelhydroxidkatalysator enthält (Reaktionslösung aus der Oxidation von Diacetonsorbose zu Diacetonketogulonsäure) im Kreislauf gepumpt. Bei einem Eingangsdruck von 1,4 bar und einer Strömungsgeschwindigkeit längs der Membranfläche von 2,5 m/sec. (Reynolds-Zahl etwa 3000) beträgt die Permeatleistung zu Beginn etwa 750 l/h · m². Im Verlauf der Filtration sinkt die Permeatleistung ab, sie wird jedoch durch kurzzeitiges (ca. 2 sec.) Rückspülen von Permeat in Abständen von etwa 2 min. insgesamt auf hohem Niveau gehalten. Nach einer Filtrationszeit von 2,5 Std. ist die Suspension auf ca. 10 l eingeengt, was einer durchschnittlichen Permeatleistung von 624 l/m² · h entspricht. Nach Zugabe von 50 l Wasser wird die Suspension erneut auf ca. 7–10 l konzentriert. Nach der Bestimmung des Nickelgehaltes nach üblichen Methoden kann die Suspension erneut zur nächsten Reaktion eingesetzt werden. Auch bei wiederholter Rückgewinnung des Katalysators und erneutem Einsatz ohne Regenerierung wird kein Nachlass der Katalysatoraktivität festgestellt.

**Patentanspruch**

Verfahren zur Abtrennung eines festen Metallkatalysators aus einer Reaktionsmischung durch Querstromfiltration unter Verwendung einer Mikrofiltrationstrennvorrichtung, wobei das den Metallkatalysator enthaltende Retentat im Kreislauf geführt wird und wobei der Differenzdruck zwischen Permeat- und Retentatraum in weitgehend regelmässigen Zeitabständen kurzzeitig umgekehrt wird, dadurch gekennzeichnet, dass eine bei der Oxidation von Diacetonsorbose zur Diacetonketogulonsäure anfallende, gelartige Nickelhydroxidschlämme enthaltende Reaktionslösung mit einer solchen Geschwindigkeit umgepumpt wird, dass sich eine Strömung mit einer Reynoldszahl von mindestens 1000 ergibt.

**Revendication**

Procédé de séparation d'un catalyseur solide à base de métal à partir d'un mélange réactionnel par filtration à courant transversal avec utilisation d'un dispositif de séparation par microfiltration, où le produit de rétention contenant le catalyseur métallique est introduit en cycle fermé et où la différence de pression entre l'espace de perméation et l'espace de rétention est inversé pendant un court instant à des intervalles de temps assez réguliers, caractérisé en ce qu'on recycle par pompage une solution réactionnelle contenant des boues gélatineuses d'hydroxyde de nickel, apparue lors de l'oxydation du diacétonesorbose en acide diacétone-cétogulonique avec une vitesse telle qu'on obtient un écoulement ayant un nombre de Reynolds d'au moins 1000.

## Claim

Process for separating off a solid metal catalyst from reaction mixtures using a microfiltration module, whereby the retained material containing the metal catalyst is pumped in circulation and whereby the pressure difference between the permeate chamber and the retained material chamber is reversed for a short time at essentially regular intervals of time, characterised in that a reaction solution from the oxidation of diacetone-sorbose to give diacetone-ketogulonic acid containing gelatinous nickel hydroxide sludges is pumped at such a rate that a flow with a Reynold's number of at least 1000 results.